# EUROPÄISCHE PATENTSCHRIFT

(11) **EP 2 266 283 B1**
(45) Veröffentlichungstag und Bekanntmachung des Hinweises auf die Patenterteilung: **31.10.2012**
(21) Anmeldenummer: 09729714.7
(22) Anmeldetag: 09.04.2009
(51) Int. Cl.: H04L 29/06, H04L 29/08

(54) **VERARBEITEN VON CLIENT-ANFRAGEN**
PROCESSING OF CLIENT INQUIRIES
TRAITEMENT DE REQUÊTES CLIENT

(30) Priorität: 11.04.2008 DE 102008018343; 09.01.2009 DE 102009004181
(43) Veröffentlichungstag der Anmeldung: 29.12.2010
(73) Patentinhaber: Giesecke & Devrient GmbH, 81677 München (DE)
(72) Erfinder: ULBRICHT, Thorsten, 81369 München (DE); STOCKER, Thomas, 81739 München (DE)
(74) Vertreter: Branzka, Thomas
(86) Internationale Anmeldenummer: PCT/EP2009/002652
(87) Internationale Veröffentlichungsnummer: WO 2009/124771

(56) Entgegenhaltungen:
- EP-A- 1 608 123
- DE-A1-102006 041 526
- OPEN MOBILE ALLIANCE: "Smartcard-Web-Server - Draft Version 1.0 - 01 Feb 2006 - OMA-TS-Smartcard-Web-Server-V1_0-20060201- D" OPEN MOBILE ALLIANCE STANDARD,, [Online] 1. Februar 2006 (2006-02-01), Seiten 1-32, XP002494693 Gefunden im Internet: URL:http://member.openmobilealliance.org/f tp/Public_documents/SEC/SCT/200 6/OMA-SCT-2006-0009R02-SCWS-spec-initial.z ip> [gefunden am 2008-09-05]
- MI-JOUNG CHOI ET AL: "An Efficient Embedded Web Server for Web-based Network Element Management" 20000410; 20000410 - 20000414, 10. April 2000 (2000-04-10), Seiten 187-200, XP010376683

## Beschreibung

Die vorliegende Erfindung betrifft ein Verfahren zum Verarbeiten einer Client-Anfrage durch einen portablen Datenträger, insbesondere das Verarbeiten einer HTTP-Anfrage durch einen Webserver eines Datenträgers, sowie einen entsprechenden Datenträger.

Ein moderner portabler Datenträger, z.B. in Form einer Chipkarte, kann einen eigenen Webserver umfassen, der HTTP-Anfragen eines Clients, z.B. eines Webbrowsers auf einem mit dem Datenträger verbundenen PC, verarbeitet. Auf diese Weise kann einem Nutzer des Datenträgers beispielsweise eine sichere Nutzung von Internet-Diensten, wie z.B. einer Internet-Banking-Anwendung, ermöglicht werden.

Eine HTTP-Anfrage gemäß dem in der Spezifikation RFC 2616 definierten Kommunikationsprotokoll HTTP/ 1.1 setzt sich dabei aus einer Anfrage-Zeile ("request line"), einem Kopfdaten-Anteil ("header fields") und einem optionalen Rumpf-Anteil ("body") zusammen. Der Kopfdaten-Anteil umfaßt eine prinzipiell nicht beschränkte Anzahl von Kopfdaten-Einträgen. In der RFC 2616 ist eine Vielzahl verschiedener Kopfdaten-Einträge definiert. Es besteht auch die Möglichkeit, neue, so genannte Erweiterungs-Kopfdaten-Einträge ("extension headers") zu verwenden, welche in der genannten Spezifikation nicht definiert sind und deshalb eventuell nicht von allem Kommunikationspartnern interpretiert werden können. Jeder Kopfdaten-Eintrag besitzt eine eindeutige Syntax, damit der Server beim Parsen den Kopfdaten-Eintrag eindeutig erkennen und interpretieren kann. In der Regel ist ein Kopfdaten-Eintrag durch ein Namensfeld ("name") identifiziert, welchem als so genannter Wert ("value") des Kopfdaten-Eintrags ein informationstragender Inhalt folgt.

Bei der Verarbeitung einer HTTP-Anfrage durch den Webserver des Datenträgers kann es vorkommen, daß auf verschiedene Kopfdaten-Einträge der HTTP-Anfrage durch den Webserver oder ihm zugehörige Hilfsfunktionalitäten, z.B. in Form eines Servlets, mehrfach zugegriffen werden muss. Deshalb werden üblicherweise sämtliche Kopfdaten-Einträge der HTTP-Anfrage in einem Speicher des Datenträgers gespeichert. Da die Anzahl und Länge der Kopfdaten-Einträge prinzipiell nicht beschränkt ist, kann das Speichern sämtlicher Kopfdaten-Einträge einer HTTP-Anfrage die Speicherressourcen des Datenträgers, die aus Kostengründen in der Regel gering sind, enorm belasten.

Aus der DE 10 2006 041 526 ist der Vorschlag bekannt, eine Kommunikation mit einem portablen Datenträger mit einem eine sichere Datenverarbeitung gewährleistenden, ressourcenbeschränkten Chipmodul, der zusätzlich über einen Massenspeicher mit großer Speicherkapazität verfügt, z.B. einen NAND-Flash-Speicher, einzurichten, indem eine HTTP-Anfrage in den Massenspeicher geschrieben wird, wodurch ein in dem ressourcenbeschränkten Chipmodul eingerichteter Webserver ein Auslösesignal erhält. Der Webserver verarbeitet die HTTP-Anfrage und schreibt eine HTTP-Antwort zurück in den Massenspeicher. Die Antwort kann dann von außen ausgelesen werden. In dieser bekannten Anordnung muß immer die vollständige HTTP-Anfrage auf dem portablen Datenträger gespeichert werden. Die Lösung setzt deshalb hinreichende Speicherreserven voraus, die durch den NAND-Flash bereitgestellt werden.

Das Dokument "Smartcard-Web-Server, Draft Version 1.0" der Open Mobile Alliance (01-02-2006) definiert eine liste von Headern die von einem Smartcard-Web-Server au jeden Fall unterstützt werden sollen.

Es ist die Aufgabe der Erfindung, eine Client-Anfrage durch einen portablen Datenträger ressourcensparend zu verarbeiten.

Diese Aufgabe wird durch ein Verfahren und einen Datenträger mit den Merkmalen der unabhängigen Ansprüche gelöst. Vorteilhafte Ausgestaltungen und Weiterbildungen sind in den abhängigen Ansprüchen angegeben.

Die vorliegende Erfindung basiert auf dem Grundgedanken, nicht sämtliche Kopfdaten-Einträge in dem Datenträger zu speichern, sondern nur solche, auf die ein, in Form einer Server-Applikation realisierter Server beim weiteren Verarbeiten der Client-Anfrage wahrscheinlich zugreifen wird.

Demgemäß empfängt der Server eines portablen Datenträgers bei dem erfindungsgemäßen Verfahren eine Client-Anfrage, analysiert einen Kopfdaten-Anteil der Client-Anfrage syntaktisch in einem Parsing-Schritt und speichert Kopfdaten-Einträge des Kopfdaten-Anteils. Erfindungsgemäß wird dabei eine erste Liste von zu speichernden Kopfdaten-Einträgen vorgegeben und es werden von dem Server solche Kopfdaten-Einträge gespeichert, die in der vorgegebenen ersten Liste enthalten sind. Die erste Liste gibt eine Auswahl derjenigen Kopfdaten-Einträge an, auf die beim Verarbeiten einer Client-Anfrage stets oder zumindest mit großer Wahrscheinlichkeit von dem Server oder einer diesem zugeordneten Applikation, z.B. einem Servlet oder dergleichen, zugriffen werden wird. Im Folgenden seinen solche Hilfsapplikationen stets mit eingeschlossen, wenn von dem Server gesprochen wird.

Ein erfindungsgemäßer Datenträger umfaßt demnach einen Speicher und einen Prozessor sowie eine in dem Speicher gespeicherte und auf dem Prozessor ausführbare Webserver-Applikation. Diese ist eingerichtet, eine Client-Anfrage einer Client-Einrichtung zu empfangen, einen Kopfdaten-Anteil der Client-Anfrage syntaktisch zu analysieren (zu parsen) und Kopfdaten-Einträge des Kopfdaten-Anteils in dem Speicher zu speichern. Erfindungsgemäß ist in dem Speicher eine vorgegebene erste Liste von zu speichernden Kopfdaten-Einträgen gespeichert und die Server-Applikation speichert solche Kopfdaten-Einträge der Client-Anfrage, die in der vorgegebenen ersten Liste enthalten sind.

Dabei bezeichnet eine Liste im Rahmen der vorliegenden Erfindung nicht eine konkrete vorgegebene Datenstruktur zum Verwalten der Kopfdaten-Einträge in der Liste, sondern eine beliebige zum Verwalten von Kopfdaten-Einträgen geeignete Datenstruktur, z.B. eine Baum-Datenstruktur, eine Heap-Datenstruktur oder dergleichen.

Die vorgegebene erste Liste enthält vorzugsweise lediglich die Namensfelder derjenigen Kopfdaten-Einträge, die zu speichern sind. Beim Parsen des Kopfdaten-Anteils der Client-Anfrage vergleicht der Server ein erkanntes Namensfeld eines Kopfdaten-Eintrags mit den in der ersten Liste gespeicherten Namensfeldern und speichert den Inhalt bzw. den Wert des Kopfdaten-Eintrags mit Bezug auf ein solches Namensfeld genau dann, wenn das erkannte Namensfeld in der ersten Liste enthalten ist. Deshalb ist nachfolgend die Formulierung, daß ein Kopfdaten-Eintrag der Client-Anfrage in einer Liste enthalten ist, so zu verstehen, daß vorzugsweise nur das entsprechende Namensfeld des Kopfdaten-Eintrags in der Liste enthalten ist.

Das erfindungsgemäße Verfahren ermöglicht es somit, die Ressourcen des Datenträgers zu schonen, da nicht mehr alle, sondern nur noch solche Kopfdaten-Einträge einer Client-Anfrage gespeichert werden, die wahrscheinlich später noch einmal verwendet werden. Auf diese Weise stellen auch geringe Speicherressourcen des Datenträgers kein Problem dar. Die weitere Verarbeitung der Client-Anfrage wird dadurch erleichtert und beschleunigt, daß der Server nun wesentlich kleinere Datenmengen zu verwalten bzw. zu durchsuchen hat. Schließlich kann die vorgegebene erste Liste an den jeweiligen Datenträger und den jeweiligen Server in optimaler Weise angepasst werden, so daß nur jeweils diejenigen Kopfdaten-Einträge einer Client-Anfrage gespeichert werden, auf die beim weiteren Verarbeiten der Client-Anfrage durch den Server des Datenträgers auch tatsächlich oder zumindest mit hoher Wahrscheinlichkeit zugegriffen wird.

Der vorzugsweise als Webserver ausgebildete Server ist eingerichtet, Client-Anfragen gemäß dem HTTP-Kommunikationsprotokoll zu empfangen und zu verarbeiten. Eine Anwendung des Verfahrens auf andere Kommunikationsprotokolle, welche einen Kopfdaten-Anteil umfassen, ist gleichfalls möglich, z.B. Protokolle im Zusammenhang mit der Verarbeitung von elektronischer Post ("E-Mail") durch entsprechende Server-Applikationen.

Die erste vorgegebene Liste der zu speichernden Kopfdaten-Einträge kann aktualisiert werden, d.h. es können zukünftig zu speichernde Kopfdaten-Einträge zu der vorgegebenen ersten Liste hinzugefügt werden und zukünftig nicht mehr zu speichernde Kopfdaten-Einträge können aus der ersten Liste entfernt werden. Eine solche Vorgehensweise erlaubt eine bedarfsgerechte Anpassung der ersten Liste an eventuell veränderte Anfrage-Bedingungen an den Server. Es wird dadurch ermöglicht, z.B. solche Kopfdaten-Einträge zu der ersten Liste hinzuzufügen, auf die der Server bei einem weiteren Schritt des Verarbeitens der Client-Anfrage erfolglos zugegriffen hat, da der entsprechende Kopfdaten-Eintrag zuvor nicht gespeichert worden ist. Wird beim nächsten Parsen ein entsprechender Kopfdaten-Eintrag erkannt, so wird dieser, da nun in der ersten Liste enthalten, gespeichert und der Server kann nachfolgend auf den entsprechenden Kopfdaten-Eintrag zugreifen. Es können gleichfalls solche Kopfdaten-Einträge aus der ersten Liste entfernt werden, auf die zur Bearbeitung von Client-Anfragen lange nicht mehr zugegriffen worden ist. Zusätzliche oder alternative Aktualisierungsregeln können vorgegeben werden, um die erste Liste stets aktuell und gleichzeitig so kurz wie möglich zu halten. Die Server-Applikation kann zum Ausführen dieser und einer der nachfolgend beschriebenen Weiterbildungen von einer Steuerapplikation unterstützt werden, die in dem Speicher des Datenträgers gespeichert und auf dem Prozessor des Datenträgers ausführbar ist. Es ist gleichfalls möglich, daß der Server Funktionalitäten umfaßt, die eine Ausführung entsprechender Schritte durch den Server selbst ermöglichen.

Vorzugsweise wird auch eine zweite Liste vorgegeben, die solche Kopfdaten-Einträge enthält, die von dem Server nicht zu speichern sind, da der Server auf diese Einträge sicher oder zumindest mit großer Wahrscheinlichkeit nicht mehr zugreifen wird. Dabei ist die zweite Liste analog der ersten Liste in der vorstehend beschriebenen Weise aufgebaut. Das Vorhalten der zweiten Liste der nicht zu speichernden Kopfdaten-Einträge beschleunigt z.B. das Parsen des Kopfdaten-Anteils der Client-Anfrage, da in der zweiten Liste enthaltene Kopfdaten-Einträger direkt nach dem Erkennen des Namensfeldes übersprungen werden können. Vorzugsweise kann auch die zweite Liste aktualisiert werden, d.h. es können zukünftig zu speichernde Kopfdaten-Einträge aus der zweiten Liste entfernt und zu der ersten Liste hinzugefügt werden und zukünftig nicht mehr zu speichernde Kopfdaten-Einträge zu der zweiten Liste hinzugefügt und aus der ersten Liste entfernt werden.

Erkennt die Server-Applikation beim Parsen des Kopf-Anteils-der Client-Anfrage einen Kopfdaten-Eintrag, der weder in der ersten Liste noch in der zweiten Liste enthalten ist, so kann dieser Eintrag zu der ersten Liste oder zu der zweiten Liste hinzugefügt werden, abhängig von einer vorgegebenen Strategie, wie solche Einträge zu behandeln sind. Es ist z.B. möglich, die Länge der ersten Liste, d.h. die Anzahl der Elemente der ersten Liste, durch eine vorgegebene Maximalanzahl zu beschränken. Dann kann definiert werden, daß weder in der ersten noch in der zweiten Liste enthaltene Kopfdaten-Einträge solange zu der ersten Liste hinzugefügt werden, wie diese ihre Maximalanzahl nicht erreicht hat. Andernfalls werden diese Kopfdaten-Einträge gegebenenfalls zu der zweiten Liste hinzugefügt und nicht gespeichert. Auf diese Weise kann z.B. der Speicherplatz in dem Datenträger, der durch die in der ersten Liste enthaltenen Kopfdaten-Einträge eingenommenen wird, effektiv begrenzt werden.

Gemäß einer bevorzugten Ausführungsform des erfindungsgemäßen Verfahrens werden diejenigen Kopfdaten-Einträge, die in der Spezifikation RFC 2616 definiert sind, in zwei Klassen aufgeteilt, nämlich in solche, die stets gespeichert werden sollen, und solche, die nie gespeichert werden sollen. Dementsprechend umfassen die vorgegebene erste und zweite Liste vorzugsweise nur solche Kopfdaten-Einträge, die aufgrund der Spezifikation bereits bekannt sind. In der Spezifikation nicht definierte Erweiterungs-Kopfdaten-Einträge können dann mittels einer dritten Liste von zu speichernden Kopfdaten-Einträgen dynamisch verwaltet werden, indem beispielsweise jeweils diejenigen von dem Server beim Parsen der Client-Anfrage erkannten Erweiterungs-Kopfdaten-Einträge der dritten Liste hinzugefügt werden, die gespeichert werden sollen. Auch die Länge einer solchen dritten Liste kann durch eine vorgegebene Maximallänge beschränkt werden. Ist diese Maximallänge erreicht, so werden weitere erkannte Erweiterungs-Kopfdaten-Einträge nicht weiter zu der dritten Liste hinzugefügt und nicht gespeichert. Kopfdaten-Einträge, die in keiner der drei Listen enthalten sind, werden nicht gespeichert.

Greift der Server beim weiteren Verarbeiten der Client-Anfrage erfolglos auf einen Kopfdaten-Eintrag zu, d.h. der Kopfdaten-Eintrag ist zuvor nicht gespeichert worden, so kann die Verarbeitung der Client-Anfrage gestört oder gar unmöglich gemacht werden. Um dies zu verhindern, kann zunächst der entsprechende Kopfdaten-Eintrag zu einer auf dem Datenträger vorhandenen Liste zu speichernder Kopfdaten-Einträge hinzugefügt werden, also z.B. zu der ersten Liste oder zu der dritten Liste. Steht die Client-Anfrage oder zumindest ein Teil davon noch zur Verfügung, d.h. sind z.B. entsprechende Daten noch in einem Lese-Puffer des Datenträgers gespeichert, so wird der Kopfdaten-Anteil der Client-Anfrage erneut geparst. Beim Erkennen des entsprechenden Kopfdaten-Eintrags wird dieser dann gespeichert, da er nun in der ersten Liste enthalten ist. Dementsprechend kann die Client-Anfrage vom Server nachfolgend vollständig bearbeitet werden, da der Kopfdaten-Eintrag nun zur Verfügung steht.

Falls die Client-Anfrage jedoch nicht mehr zur Verfügung steht, der entsprechende Kopfdaten-Anteil also nicht mehr erneut geparst werden kann, kann der Server eine Sendeaufforderung an die Client-Einrichtung übertragen, welche die Client-Anfrage gesendet hat, und diese dadurch auffordern, die entsprechende Client-Anfrage erneut an den Server zu senden. Daraufhin ist ein vollständiges Parsen des Kopfdaten-Anteils und ein Speichern des zuvor nicht gespeicherten, nun in der ersten Liste enthaltenen Kopfdaten-Eintrags möglich. Ein derartiges Vorgehen ist insbesondere für solche Client-Anfragen durchführbar, die bei mehrmaliger Ausführung keinen weiteren Effekt verursachen (so genannte idempotente Anfragen). Schließlich kann ein Nutzer des Datenträgers, z.B. über eine entsprechende HTML-Seite, aufgefordert werden, die Client-Anfrage über die Client-Anwendung erneut zu senden, woraufhin diese aufgrund der nun aktualisierten ersten Liste verarbeitet werden kann.

Es besteht weiterhin die Möglichkeit, daß der Server selbst die vorgegebene erste Liste definiert, indem dieser sämtliche Kopfdaten-Einträge, auf die der Server potentiell bei einem Verarbeiten einer Client-Anfrage zugreifen könnte, zu der ersten Liste hinzufügt bzw. die erste Liste aus genau diesen Kopfdaten-Einträgen bildet. In dem Fall, in dem eine derart aufgebaute erste Liste nicht zu viele Kopfdaten-Einträge umfaßt, bildet sie eine optimale Ausgangslage zum effektiven und ressourcensparenden Verarbeiten von Client-Anfragen. Ist eine auf diese Weise gebildete erste Liste zu lang, so können nachfolgend z.B. mittels statistischer Methoden solche Kopfdaten-Einträge sukzessive aus der ersten Liste entfernt werden, auf die der Server nur sehr selten zugreift.

Die vorliegende Erfindung wird nachfolgend mit Bezug auf die beiliegenden Zeichnungen beispielhaft beschrieben. Darin zeigen:
- Figur 1: eine bevorzugte Ausführungsform eines erfindungsgemäßen Datenträgers;
- Figur 2: die Struktur einer Webserver-Applikation;
- Figur 3: den Aufbau einer HTTP-Anfrage; und
- Figur 4: ein Flußdiagramm einer bevorzugten Ausführungsform des erfindungsgemäßen Verfahrens.

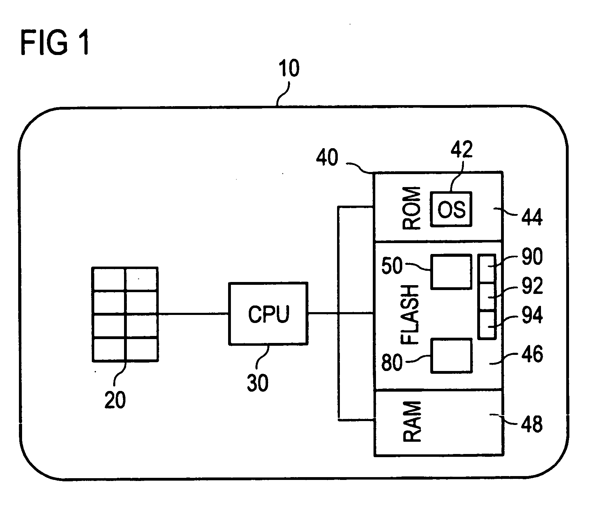

Mit Bezug auf Figur 1 umfaßt ein portabler Datenträger 10, der hier als Chipkarte ausgebildet ist, eine Datenkommunikationsschnittstelle 20 sowie einen Mikrokontroller mit einen Prozessor (CPU) 30 und einem aus verschiedenen Speichern 44, 46 und 48 gebildeten Speichersystem 40. Der Mikrokontroller mit Prozessor 30 und Speichersystem 40 ist regelmäßig auf einem einzelnen Halbleiter-Chip mit einer beschränkten Grundfläche ausgebildet, die typischerweise eine Fläche von ≤ 25 mm² hat. Die begrenzte Grundfläche beschränkt die für die Funktionalität des Datenrägers 10 realisierbaren technischen Ressourcen. Bedingt durch die eingeschränkte geometrische Größe ist vor allem die Aufnahmekapazität des Speichersystems 40 sehr gering und liegt um Größenordnungen unter den typischen Speicherkapazitäten üblicher PCs. So liegen etwa die Speicherkapazitäten von nichtflüchtigen wiederbeschreibbaren Speichern für Chipkarten im Bereich von einigen MByte, während vergleichbare Speicher in PCs im GByte-Bereich liegen. Eine Einführung in Aufbau und Funktion von Mikrocontrollern für Chipkarten, aus der auch die Merkmale der Ressourcenbeschränkung entnehmbar sind, findet sich in dem "Handbuch der Chipkarten" von W.Rankl, W. Effing, 5. Aufl., Hanser Verlag München, 2008, auf das hierzu verwiesen wird.

Die Kommunikationsschnittstelle 20 ist als Kontaktfeld gemäß ISO 7816 ausgebildet und unterstützt z.B. sowohl das T=0 / T=1 Kommunikationsprotokoll als auch das USB-Kommunikationsprotokoll. Es ist auch möglich, die Kommunikationsschnittstelle auf andere Weise auszubilden, beispielsweise nach dem SD-Standard. Über die Kommunikationsschnittstelle 20 kann der Datenträger 10 mit verschiedenen Datenverarbeitungseinrichtungen verbunden werden. Der Datenträger 10 kann dabei auch als Massenspeicherkarte, (U)SIM-Mobilfunkkarte, USB-Token oder dergleichen ausgebildet sein. Als Datenverarbeitungseinrichtungen, mit denen der Datenträger 10 verbindbar ist, kommen ein Personal Computer (PC), ein Laptop, ein PDA, ein Mobilfunkendgerät und dergleichen in Frage.

Das Speichersystem 40 beinhaltet einen nichtflüchtigen, nur lesbaren ROM-Speicher 44, einen nichtflüchtigen, wiederbeschreibbaren Speicher 46, z.B. vom Flash-Typ, sowie einen flüchtigen, schnellen Speicher 48 vom RAM-Typ.

Der ROM-Speicher 44 trägt ein den Datenträger 10 steuerndes Betriebssystem (OS) 42. Teile des Betriebssystems 42, insbesondere sogenannte Bibliotheksfunktionen, oder das gesamte Betriebssystem 42 können auch in dem nichtflüchtigen, wiederbeschreibbaren FLASH-Speicher 46 gespeichert sein. Der Speicher 46 kann auch ein EEPROM-Speicher oder dergleichen sein.

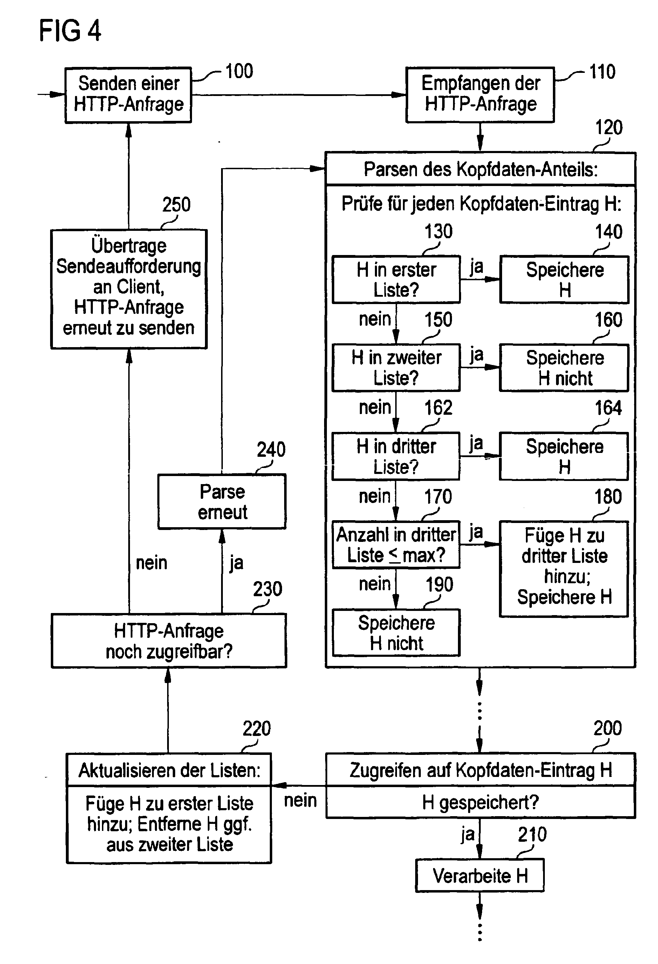

In dem durch die Speicher 44, 46 und 48 gebildeten Speichersystem 40 sind eine Server-Applikation 50, eine Steuerapplikation 80 sowie eine erste Liste 90, eine zweite Liste 92 und eine dritte Liste 94 gespeichert. Die Inhalte der Listen 90, 92, 94 und die Applikationen 50, 80 werden nachstehend mit Bezug auf Fig. 4 genauer beschrieben. Der RAM-Speicher 48 dient dem Datenträger 10 als schneller Arbeitsspeicher.

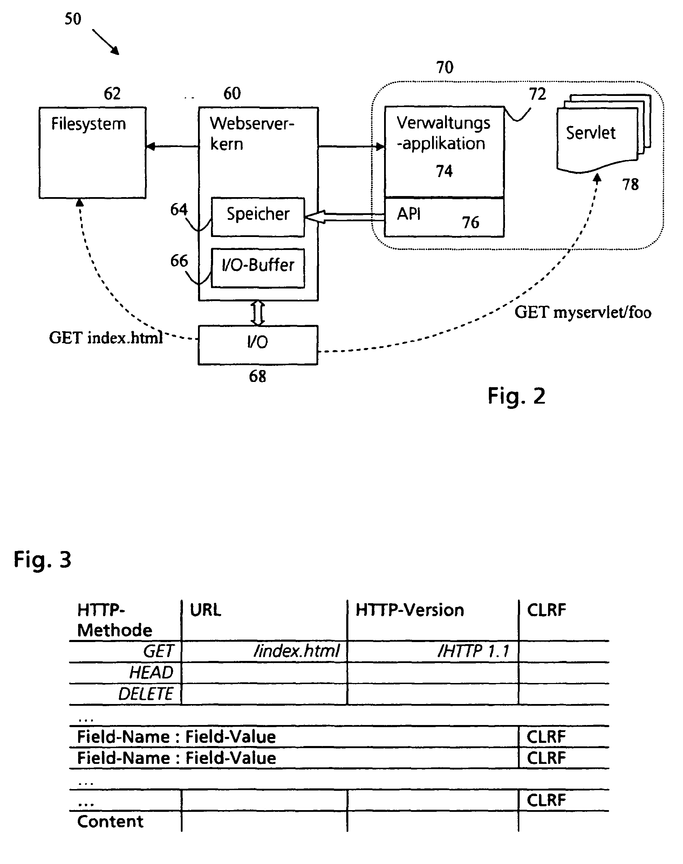

Die Server-Applikation 50 ist als vorzugsweise als Webserver-Applikation ausgeführt. Ihre Struktur ist in Fig. 2 genauer dargstellt. Sie besteht aus einem Webserverkern 60, der mit einer Anfrage-Schnittstelle 68 sowie statischen Ressourcen 62 einerseits und dynamischen Ressourcen 70 andererseits verbunden ist. Die dynamischen Ressourcen 70 bilden eine dynamische Programmierumgebung. Der Webserverkern 60 verfügt über einen I/O-Buffer 66 sowie über Speicherplatz 64 zur Speicherung von HTTP-Anfragen oder Teilen davon. Der Speicherplatz 64 ist dabei in einem wiederbeschreibbaren Speicher 46 oder 48 des Speichersystems 40 bereitgestellt. Die statischen Ressourcen 62 können in einfacher Weise in Form eines Filesystem realisiert sein.

Die dynamische Programmierumgebung 70 besteht aus einer Programmierschnittstelle 72 sowie einem damit verbundenen Erweiterung in Gestalt einer oder mehrerer Hilfsfunktionalitäten 78. Die Hilfsfunktionalitäten 78 beinhalten Anwendungen. Nachfolgend wird davon ausgegangen, daß die Hilfsfunktionalitäten 78 als Servlets realisiert sind, d.h. als dynamische Web-Applikationen, die eine Antwort abhängig von den in einer HTTP-Anfrage übergebenen Werten generieren. Neben der Ausführung als Servlet kommen selbstverständlich andere Ausführungen in Betracht.

Die Programmierschnittstelle 72 gliedert sich in eine Verwaltungsapplikation 74, die von dem Webserverkern 60 zugeleitete URLs auflöst und ihnen eine 74, die von dem Webserverkern 60 zugeleitete URLs auflöst und ihnen eine Hilfsfunktionalität 78 zuordnet, sowie eine Rückgriffschnittstelle 76, über die ein Servlet 78 auf eine vom Webserverkern 60 gespeicherte HTTP-Anfrage bzw. auf Werte der Anfrage zugreifen kann. Die Verwaltungsapplikation 74 ist beispielsweise ein sogenanntes Framework, die Rückgriffschnittstelle 76 typischerweise ein API (*application programming interface*).

Der Webserverkern 60 nimmt eine eingehende HTTP-Anfrage entgegen und löst die darin enthaltene URL auf. Bezeichnet die URL eine statische Ressource, d.h. fordert die Anfrage etwa lediglich einen Zugriff auf die angegebene URL und die Rückgabe der dort gespeicherten Information, ist die Anfrage mithin etwa vom Typ "GET index.html", führt der Webserverkern 60 die Anfrage unter Zugriff auf das Filesystem 62 unmittelbar aus. Erfordert die Anfrage dagegen die dynamische Erzeugung einer Antwort in Abhängigkeit von einem in der Anfrage mitgeteilten Wert, d.h. ist die Anfrage etwa vom Typ "GET myservlet/ foo", übergibt der Webserverkern 60 die Beantwortung der Anfrage an die Verwaltungsapplikation 74 der dynamischen Programmierumgebung. Die Verwaltungsapplikation 74 bestimmt zu der mitgeteilten URL ein zugeordnetes Servlet 78. Dieses führt die Beantwortung der Anfrage aus.

Im Rahmen der Ausführung der Beantwortung ist es regelmäßig erforderlich, daß das ausführende Servlet 78 auf die im Webserverkern 60 gespeicherte HTTP-Anfrage zugreifen muß. Damit dies möglich ist; muß die Anfrage grundsätzlich vollständig im Webserverkern 60 gespeichert werden. In einer ressourcenbeschränkten Umgebung, wie sie etwa auf einem Datenträger in Form einer Chipkarte regelmäßig vorliegt, ist eine vollständige Speicherung wegen der Ressourcenbeschränkung jedoch nicht möglich oder aus technischen Gründen nicht erwünscht. Erfindungsgemäß werden deshalb nur bestimmte, wichtige Teile einer HTTP-Anfrage für nachfolgende Rückgriffe durch eine Anwendung gespeichert.

HTTP-Anfragen, wie sie in der Spezifikation RFC 2616 definiert sind, bestehen aus einer Folge von Zeilen, die jeweils mit einer einen Zeilenvorschub bewirkenden Anweisung CRLF abgeschlossen werden. Fig. 3 veranschaulicht den grundsätzlichen Aufbau einer HTTP-Anfrage. Die erste Zeile ("request line") beinhaltet eine Angabe der HTTP-Methode, z.B. GET, HEAD, DELETE, eine URL zur Bezeichnung einer Ressource, z.B. /index.html, für die Anfrage sowie eine Angabe der verwendeten HTTP-Version, z.B. HTTP 1.1. Die folgenden Zeilen ("Header Fields") beinhalten ergänzende Information zu einer HTTP-Anfrage in Form von Kopfdaten-Einträgen. Sie bestehen jeweils aus Namensfeld ("Field-Name") gefolgt von einem Feldwert ("Field-Value") und werden wiederum mit der Zeilenvorschub-Anweisung CRLF abgeschlossen. Die Anzahl der Kopfdaten-Einträge ist grundsätzlich nicht begrenzt. Den Abschluß einer HTTP-Anfrage bildet der Anfrageninhalt ("Content").

Entsprechend ihrem zeilenweisen Aufbau werden HTTP-Anfragen zweckmäßig zeilenweise vom Webserverkern 60 im I/O-Buffer 66 entgegengenommen und ausgewertet. Sofern eine dynamische Ressource 70 angesprochen wird, müssen die Kopfdaten-Einträge für eventuelle spätere Rückgriffe durch die ausführende Ressource im Webserverkern 60 gespeichert werden.

Im Hinblick auf die Verarbeitung durch eine auf einem ressourcenbeschränkten System eingerichtete Webserver-Applikation 50 ist dabei problematisch, daß die Anzahl von Zeilen mit Kopfdaten-Einträgen nicht beschränkt ist. Um mit dem auf einem ressourcenbeschränkten System zur Verfügung stehenden Speicherplatz auszukommen, werden die Kopfdaten-Einträge deshalb erfindungsgemäß nicht vollständig gespeichert, sondern nur bestimmte davon. Ein solches leistendes Verfahren ist in Fig. 4 dargestellt.

Wie in Fig. 4 veranschaulicht, sendet eine Client-Applikation, z.B. ein Webbrowser eines Client-PCs, mit dem der Datenträger 10 verbunden ist, in Schritt 100 eine HTTP-Anfrage an den Datenträger 10, die von der Webserver-Applikation 50 in Schritt 110 empfangen wird. Es wird davon ausgegangen, daß die Anfrage an eine dynamische Ressource 70 gerichtet ist.

In Schritt 120 wird der Kopfdaten-Anteil der HTTP-Anfrage syntaktisch analysiert ("geparst"). Dabei prüft die Webserver-Applikation 50 nacheinander für jeden erkannten Kopfdaten-Eintrag H des Kopfdaten-Anteils, ob H in einer der Listen 90, 92 oder 94 enthalten ist. In Schritt 130 wird zuerst geprüft, ob H in der ersten Liste 90 enthalten ist, welche die Menge der zu speichernden Kopfdaten-Einträge definiert. Ist dies der Fall, so wird der Kopfdaten-Eintrag H in Schritt 140 in dem Speicher 46 des Datenträgers 10 gespeichert und der nächste erkannte Kopfdaten-Eintrag wird geprüft. Falls H nicht in der ersten Liste 90 enthalten ist, wird in Schritt 150 geprüft, ob H in der zweiten Liste 92 liegt, welche die nicht zu speichernden Kopfdaten-Einträge vorgibt. Ist dies der Fall, so wird in Schritt 160 definiert, daß H nicht gespeichert wird, und es wird zur Prüfung des nächsten Kopfdaten-Eintrags des Kopfdaten-Anteils übergegangen.

Die erste Liste 90 umfaßt vorzugsweise solche gemäß der Spezifikation RFC 2616 (HTTP/1.1) definierten Kopfdaten-Einträge, die in dem Datenträger 10 gespeichert werden sollen, wenn sie in einem Kopfdaten-Anteil einer Client-Anfrage erkannt werden. Dabei handelt es sich in der Regel um Kopfdaten-Einträge, auf die stets oder mit sehr hoher Wahrscheinlichkeit beim Verarbeiten einer Client-Anfrage zugegriffen wird, z.B. "Content-Length" oder "Content-Type", weiche die Länge bzw. den Typ eines nachgefragten oder transportierten Inhalts angeben. Umgekehrt umfaßt die zweite Liste 92 vorzugsweise solche gemäß dieser Spezifikation definierten Kopfdaten-Einträge, die nicht gespeichert werden sollen, da eine geringe Wahrscheinlichkeit besteht, daß die Webserver-Applikation 50 beim Verarbeiten einer Client-Anfrage jemals auf einen solchen Kopfdaten-Eintrag zugreift, wie z.B. die Angabe des "User-Agent", also des Namens der Client-Applikation, von der die Client-Anfrage ausgeht.

Beim Prüfen eines Kopfdaten-Eintrags H kann der Fall eintreten, daß H weder in der ersten Liste 90 noch in der zweiten Liste 92 enthalten ist. Dies trifft insbesondere für Erweiterungs-Kopfdaten-Einträge zu, die nicht in der RFC 2616 definiert sind und die beispielsweise nur zwischen einer Client-Anwendung und der Webserver-Applikation 50 vorab vereinbart worden sind. Zur Verwaltung zu speichernder Erweiterungs-Kopfdaten-Einträge wird eine dritte Liste 94 vorgehalten, die anfangs leer sein kann und zu der beim Parsen von der Webserver-Applikation 50 erkannte Erweiterungs-Kopfdaten-Einträge dynamisch hinzugefügt werden können. In Schritt 162 wird demnach zunächst geprüft, ob H bereits in der dritten Liste 94 enthalten ist. Falls ja, so wird H in Schritt 164 in dem Speicher 46 gespeichert. Im gegenteiligen Fall wird in Schritt 170 anhand eines Speicherkriteriums entschieden, ob H zu der dritten Liste 94 hinzugefügt und gespeichert wird oder nicht. Dazu wird eine Maximalanzahl max von in der dritten Liste 94 zu speichernden Erweiterungs-Kopfdaten-Einträgen vorgegeben. In Schritt 170 wird dann konkret überprüft, ob die Maximalanzahl max bereits erreicht ist. Falls dies nicht der Fall ist, fügt die Webserver-Applikation 50 den Erweiterungs-Kopfdaten-Eintrag H in Schritt 180 zu der dritten Liste 94 hinzu und speichert H in dem Speicher 46. Ist die dritte Liste 94 hingegen voll, d.h. die Maximalanzahl zu speichernder Einträge max ist erreicht, so kann H gegebenenfalls zu der zweiten Liste 92 hinzugefügt werden und wird, wie in Schritt 190 definiert, nicht gespeichert. Gleiches gilt für alle in dem Kopfdaten-Anteil durch die Webserver-Applikation 50 erkannten Kopfdaten-Einträge, die in keiner der Listen 90, 92 oder 94 enthalten sind.

Zur Verwaltung der Erweiterungs-Kopfdaten-Einträge sind auch alternative Vorgehensweisen möglich. Beispielsweise kann als Speicherkriterium eine Anzahl von solchen Kopfdaten-Einträgen vorgegeben werden, die nicht in der ersten Liste 90 und nicht in der zweiten Liste 92 enthalten sind. Die Web-server-Applikation 50 speichert dann solange derartige Kopfdaten-Einträge, die in der HTTP-Anfrage erkannt werden, in dem Speicher 46, bis die vorgegebene Anzahl erreicht ist. Auf diese Weise kann auf das Vorhalten der dritten Liste 94 verzichtet werden. Alternativ können zu speichernde Erweiterungs-Kopfdaten-Einträge auch zu der ersten Liste 90 hinzugefügt werden, um sicherzustellen, daß sie zukünftig gespeichert werden. Um ein zu starkes Anwachsen der ersten Liste 90 zu verhindern, kann auch für diese eine Maximalanzahl aufzunehmender Kopfdaten-Einträge vorgegeben werden.

Im weiteren Verlauf der Verarbeitung der HTTP-Anfrage der Client-Anwendung durch die Webserver-Applikation 50 greift diese, wie in Schritt 200 gezeigt, auf einen Kopfdaten-Eintrag H zu. Dies gelingt nur dann, wenn H zuvor beim Parsen des Kopfdaten-Anteils gespeichert worden ist. In diesem Fall kann H in definierter Weise verarbeitet werden, wie dies mit Bezug auf Schritt 210 angedeutet ist. Ist H hingegen nicht gespeichert worden, so kann aktuell auf diesen Kopfdaten-Eintrag nicht zugegriffen werden und die Verarbeitung der HTTP-Anfrage kann nicht mit Schritt 210 fortgesetzt werden.

Um diesen Mangel zu beheben und eine korrekte Verarbeitung der HTTP-Anfrage zu ermöglichen, wird in Schritt 220 der Kopfdaten-Eintrag H zu einer Liste zu speichernder Kopfdaten-Einträge, also z.B. zu der ersten Liste 90, hinzugefügt und gegebenenfalls aus der zweiten Liste 92 der nicht zu speichernden Kopfdaten-Einträge gelöscht. Auf diese Weise wird sichergestellt, daß H beim nächsten Parsen eines Kopfdaten-Anteils, welcher H enthält, gespeichert wird.

In Schritt 230 wird dann geprüft, ob die Webserver-Applikation 50 noch auf die empfangene HTTP-Anfrage oder zumindest den Teil davon zugreifen kann, der den Kopfdaten-Eintrag H umfaßt. Dies ist z.B. der Fall, wenn ein entsprechender Datenblock noch in einem Lesespeicher des Datenträgers vorhanden ist. Wie in Schritt 240 gezeigt, kann die Webserver-Applikation 50 daraufhin den relevanten Anteil der HTTP-Anfrage erneut Parsen. Da der Kopfdaten-Eintrag H nun in der ersten Liste enthalten ist, wird H in Schritt 140 in dem Speicher 46 des Datenträgers 10 gespeichert und die Webserver-Applikation 50 kann beim weiteren Verarbeiten der HTTP-Anfrage in Schritt 210 den Kopfdaten-Eintrag in definierter Weise verarbeiten.

Ist die HTTP-Anfrage jedoch für die Webserver-Applikation 50 nicht mehr zugreifbar, d.h. außer den in Schritt 120 gespeicherten Kopfdaten-Einträgen finden sich keine weiteren Informationen über die HTTP-Anfrage in einem Speicher des Datenträgers 10, so kann die Webserver-Applikation 50 die Client-Einrichtung, welche die HTTP-Anfrage gesendet hat, veranlassen, diese Anfrage erneut zu senden, wie es in Schritt 250 gezeigt ist. Dazu sendet die Webserver-Applikation 50 z.B. eine Sendeaufforderung an die Client-Einrichtung, mit der diese aufgefordert wird, die entsprechende HTTP-Anfrage erneut zu senden. Dies ist insbesondere bei so genannten idempotenten HTTP-Anfragen möglich, also solchen Anfragen, die bei mehrmaliger Ausführung keine anderen Wirkungen erzeugen als bei einmaliger Ausführung. Alternativ kann die Webserver-Applikation 50 den Nutzer des Datenträgers 10 auffordern, die HTTP-Anfrage über die Client-Einrichtung erneut zu senden. Dazu kann beispielsweise eine entsprechende HTML-Seite erzeugt werden.

In den zuletzt geschilderten Fällen mit Bezug auf die Schritte 220 bis 250 kann es notwendig sein, daß bereits im Verlauf der Verarbeitung der HTTP-Anfrage durch die Webserver-Applikation 50 verarbeitete Daten zurückgesetzt werden müssen, da, wie veranschaulicht, eine entsprechende Verarbeitung der HTTP-Anfrage mit Schritt 120 erneut gestartet wird. Es ist möglich, daß eine solche Schleife beim Verarbeiten einer HTTP-Anfrage mehrfach durchlaufen wird, weil mehrere Kopfdaten-Einträge, auf die später zugegriffen wird, zuvor nicht gespeichert worden sind.

Die Steuerapplikation 80 unterstützt die Webserver-Applikation 50 bei der Ausführung der vorstehend beschriebenen Schritte, insbesondere beim Aktualisieren der Listen 90, 92 und 94. Es ist aber auch möglich, daß sämtliche beschriebenen Funktionalitäten durch die Webserver-Applikation 50 implementiert sind. Die Webserver-Applikation 50 kann als eine Applikation, aber auch als eine Ansammlung verschiedener Applikationen implementiert sein, welche beispielsweise Servlets umfaßt, mittels welcher beim Verarbeiten der HTTP-Anfrage (vgl. Schritt 200) auf Kopfdaten-Einträge zugegriffen wird.

Alleine von der Webserver-Applikation 50 ausgehend bietet sich eine weitere Möglichkeit, die erste Liste 90 der zu speichernden Kopfdaten-Einträge aufzubauen. Da aufgrund der vorgegebenen Struktur der Webserver-Applikation 50 eindeutig festgelegt ist, auf welche Kopfdaten-Einträge die Web-server-Applikation 50 beim Verarbeiten einer beliebigen HTTP-Anfrage potentiell zugreifen könnte, kann die Webserver-Applikation 50 die erste Liste 90 aus genau solchen Kopfdaten-Einträgen aufbauen. In dem Fall, in dem die derart gebildete Liste 90 nicht zu viele Einträge umfaßt, ist eine optimale Verarbeitung von HTTP-Anfragen sichergestellt. Einerseits wird nur wenig Speicher und wenig Laufzeit benötigt, um relevante Kopfdaten-Einträge zu speichern und zu verwalten. Andererseits kann beim Verarbeiten der HTTP-Anfrage stets auf benötigte Kopfdaten-Einträge zugegriffen werden, da diese immer gespeichert sind. Korrekturen der ersten Liste 90, wie sie mit Bezug auf die Schritte 220 bis 250 beschrieben worden sind, können entfallen.

Die vorbeschriebene Lösung läßt sich beispielsweise bei der Realisierung eines Multimedia-Telefonbuchs, das z.B. eine Nummer zusammen mit einem Fotos eine Teilnehmers ausgibt, auf einer Chipkarte einsetzen. Das Telefonbuch wird dabei durch ein entsprechendes Servlet 78 realisiert. HTTP-Anfragen an ein solches Telefonbuch enthalten einen Kopfdaten-Eintrag des Typs "Content-Length". Dieser ist stets in der ersten Liste 90 enthalten und wird daher gespeichert. Weiter enthält eine HTTP-Anfrage an ein solches Telefonbuch einen Kopfdaten-Eintrag des Typs "User-Agent", in dem der Name des für die HTTP-Anfrage verwendeten Browsers angegeben wird. Dieser Eintrag ist in der zweiten Liste 92 gespeichert und wird daher nicht gespeichert.

## Patentansprüche

1. Verfahren zum Verarbeiten von Client-Anfragen durch einen ressourcenbeschränkten portablen Datenträger (10), umfassend die durch eine auf dem Datenträger (10) eingerichtete Server-Applikation (50) auszuführenden Schritte:
- Empfangen (110) einer Client-Anfrage;
- Parsen (120) eines Kopfdaten-Anteils der Client-Anfrage;
- Speichern (140; 180) von Kopfdaten-Einträgen des Kopfdaten-Anteils;
**dadurch gekennzeichnet, daß**
eine erste Liste (90) von zu speichernden Kopfdaten-Einträgen vorgegeben wird und solche Kopfdaten-Einträge der Client-Anfrage von der Server-Applikation gespeichert werden, die in der vorgegebenen ersten Liste (90) enthalten sind, und
eine zweite Liste (92) von nicht zu speichernden Kopfdaten-Einträgen vorgegeben wird und solche Kopfdaten-Einträge der Client-Anfrage von der Server-Applikation nicht gespeichert werden, die in der vorgegebenen zweiten Liste (92) enthalten sind.

2. Verfahren nach Anspruch 1, **dadurch gekennzeichnet, daß** die Server-Applikation (50) als Webserver-Applikation ausgebildet ist, die als Client-Anfrage eine HTTP-Anfrage empfängt.

3. Verfahren nach Anspruch 1 oder 2, **dadurch gekennzeichnet, daß** zukünftig zu speichernde Kopfdaten-Einträge zu der ersten Liste (90) hinzugefügt (180; 220) und zukünftig nicht mehr zu speichernde Kopfdaten-Einträge aus der ersten Liste (90) entfernt werden.

4. Verfahren nach Anspruch 3 **dadurch gekennzeichnet, daß** zukünftig zu speichernde Kopfdaten-Einträge aus der zweiten Liste (92) entfernt (220) und zukünftig nicht mehr zu speichernde Kopfdaten-Einträge zu der zweiten Liste (92) hinzugefügt werden.

5. Verfahren nach Anspruch 3 oder 4 **dadurch gekennzeichnet, daß** solche Kopfdaten-Einträge der Client-Anfrage, die nicht in der ersten Liste (90) der zu speichernden Kopfdaten-Einträge und nicht in der zweiten Listen (92) der nicht zu speichernden Kopfdaten-Einträge enthalten sind, zu der ersten Liste (90) der zu speichernden Kopfdaten-Einträge hinzugefügt und gespeichert (180) werden.

6. Verfahren nach einem der Ansprüche 3 bis 5, **dadurch gekennzeichnet, daß** die erste (90) und die zweite Liste (92) durch eine Spezifikation vorgegebene Kopfdaten-Einträge umfassen, wobei für einen nicht durch die Spezifikation vorgegebenen Kopfdaten-Eintrag der Client-Anfrage ein Speicherkriterium geprüft wird und dieser Kopfdaten-Eintrag in eine dritte Liste (94) von zu speichernden Kopfdaten-Einträgen hinzugefügt wird, wenn das Speicherkriterium erfüllt ist.

7. Verfahren nach Anspruch 6, **dadurch gekennzeichnet, daß** eine maximale Anzahl von zu der dritten Liste (94) hinzuzufügenden Kopfdaten-Einträgen vorgegeben wird und als Speicherkriterium geprüft wird, ob die Anzahl der aktuell in der dritten Liste (94) gespeicherten Kopfdaten-Einträge kleiner ist als die vorgegebene maximale Anzahl.

8. Verfahren nach einem der Ansprüche 1 bis 7, **gekennzeichnet durch** den weiteren Schritt des Zugreifens (200) auf einen Kopfdaten-Eintrag der Client-Anfrage **durch** die Webserver-Applikation (50 und, falls der entsprechende Kopfdaten-Eintrag zuvor nicht gespeichert worden ist, den Schritt des Hinzufügens (220) des Kopfdaten-Eintrags zu einer Liste (90, 94) zu speichernder Kopfdaten-Einträge.

9. Verfahren nach Anspruch 8, **gekennzeichnet durch** die weiteren Schritte des erneuten Parsens (240) und des Speicherns (140) des Kopfdaten-Eintrags **durch** den Server nach dem Schritt des Hinzufügens (220) des Kopfdaten-Eintrags zu einer Liste (90, 94) zu speichernder Kopfdaten-Einträge.

10. Verfahren nach Anspruch 8, **gekennzeichnet durch** den weiteren Schritt des Übertragens (250) einer Sendeaufforderung **durch** die Webserver-Applikation (50) an eine Client-Einrichtung, welche die Client-Anfrage an den Datenträger (10) gesendet hat, zum erneuten Senden der Client-Anfrage durch die Client-Einrichtung, nach dem Schritt des Hinzufügens (220) des Kopfdaten-Eintrags zu einer Liste (90, 94) zu speichernder Kopfdaten-Einträge.

11. Verfahren nach einem der Ansprüche 1 bis 10, **gekennzeichnet durch** den Schritt des Hinzufügens solcher Kopfdaten-Einträge zu einer Liste (90, 94) zu speichernder Kopfdaten-Einträge **durch** die Webserver-Applikation (50), auf die die Webserver-Applikation (50in einem weiteren Schritt zum Verarbeiten der Client-Anfrage potentiell zugreift.

12. Portabler ressourcenbeschränkter Datenträger (10), umfassend einen auf einem einzelnen Halbleiter-Chip untergebrachten Speicher (46), einen Prozessor (30) sowie eine in dem Speicher (46) gespeicherte und auf dem Prozessor (30) ausführbare Server-Applikation (50), die eingerichtet ist, eine Client-Anfrage zu empfangen, einen Kopfdaten-Anteil der Client-Anfrage zu parsen und Kopfdaten-Einträge des Kopfdaten-Anteils in dem Speicher zu speichern, **dadurch gekennzeichnet, daß** in dem Speicher (46) eine vorgegebene erste Liste (90) und eine zweite Liste (92) gespeichert sind, wobei in der ersten Liste (90) zu speichernde Kopfdaten-Einträgen gespeichert sind und die Server-Applikation (50) eingerichtet ist, solche Kopfdaten-Einträge der Client-Anfrage zu speichern, die in der vorgegebenen ersten Liste (90) enthalten sind, und in der zweiten Liste (92) nicht zu speichernde Kopfdaten-Einträge gespeichert sind und solche Kopfdaten-Einträge der Client-Anfrage nicht gespeichert werden, die in der vorgegebenen zweiten Liste (92) enthalten sind.

13. Datenträger (10) nach Anspruch 12, **dadurch gekennzeichnet, daß** die Server-Applikation (50) als Webserver-Applikation ausgebildet ist und eingerichtet ist, HTTP-Anfragen einer HTTP-Client-Applikation zu empfangen.

14. Datenträger (10) nach Anspruch 12 oder 13, **gekennzeichnet durch** eine in dem Speicher (46) gespeicherte und auf dem Prozessor (30) ausführbare Steuerapplikation (80), die eingerichtet ist, in Wechselwirkung mit der Webserver-Applikation (50) ein Verfahren nach einem der Ansprüche 3 bis 11 durchzuführen.

15. Datenträger (10) nach einem der Ansprüche 12 bis 14, **dadurch gekennzeichnet, daß** die Webserver-Applikation (50) eingerichtet ist, solche Kopfdaten-Einträge zu einer Liste (90, 94) zu speichernder Kopfdaten-Einträge hinzuzufügen, auf die die Webserver-Applikation (50) in einem weiteren Schritt zum Verarbeiten der Client-Anfrage potentiell zugreift.

## Claims

1. A method for processing client requests by a limited-resource portable data carrier (10), comprising the steps, to be carried out by a server application (50) set up on the data carrier (10), of:
- receiving (110) a client request;
- parsing (120) a header data portion of the client request;
- storing (140; 180) header data entries of the header data portion;
**characterized in that**
a first list (90) of header data entries to be stored is predetermined, and those header data entries of the client request which are contained in the predetermined first list (90) are stored by the server application, and
a second list (92) of header data entries not to be stored is predetermined, and those header data entries of the client request which are contained in the predetermined second list (92) are not stored by the server application.

2. The method according to claim 1, **characterized in that** the server application (50) is configured as a web server application receiving an HTTP request as client request.

3. The method according to claim 1 or 2, **characterized in that** header data entries to be stored in the future are added (180; 220) to the first list (90) and header data entries which are no longer to be stored in the future are removed from the first list (90).

4. The method according to claim 3, **characterized in that** header data entries to be stored in the future are removed (220) from the second list (92), and header data entries which are no longer to be stored in the future are added to the second list (92).

5. The method according to claim 3 or 4, **characterized in that** those header data entries of the client request which are not contained in the first list (90) of header data entries to be stored and not contained in the second list (92) of header data entries not to be stored, are added to the first list (90) of the header data entries to be stored and are stored (180).

6. The method according to any of the claims 3 to 5, **characterized in that** the first (90) and the second list (92) comprise header data entries predetermined by a specification, wherein for a header data entry of the client request that is not predetermined by the specification a storage criterion is checked and said header data entry is added to a third list (94) of header data entries to be stored, provided that the storage criterion is fulfilled.

7. The method according to claim 6, **characterized in that** a maximum number of header data entries to be added to the third list (94) is predetermined and it is checked as storage criterion whether the number of header data entries currently stored in the third list (94) is smaller than the predetermined maximum number.

8. The method according to any of the claims 1 to 7, **characterized by** the further step of accessing (200) a header data entry of the client request by the web server application (50) and, if the corresponding header data entry was not stored before, the step of adding (220) the header data entry to a list (90, 94) of header data entries to be stored.

9. The method according to claim 8, **characterized by** the further steps of re-parsing (240) and of storing (140) the header data entry by the server after the step of adding (220) the header data entry to a list (90, 94) of header data entries to be stored.

10. The method according to claim 8, **characterized by** the further step of transmitting (250) a send request by the web server application (50) to a client device that sent the client request to the data carrier (10), for re-sending the client request by the client device, after the step of adding (220) the header data entry to a list (90, 94) of header data entries to be stored.

11. The method according to any of the claims 1 to 10, **characterized by** the step of adding those header data entries to a list (90, 94) of header data entries to be stored by the web server application (50), which are potentially accessed by the web server application (50) in a further step for processing the client request.

12. A portable, limited-resource data carrier (10), comprising a memory (46) accommodated on a single semiconductor chip, a processor (30), as well as a server application (50) that is stored in the memory (46) and executable on the processor (30) and which is adapted to receive a client request, to parse a header data portion of the client request and to store header data entries of the header data portion in the memory, **characterized in that** in the memory (46) there are stored a predetermined first list (90) and a second list (92), wherein header data entries to be stored are stored in the first list (90) and the server application (50) is adapted to store those header data entries of the client request which are contained in the predetermined first list (90), and header data entries not to be stored are stored in the second list (92), and those header data entries of the client request which are contained in the predetermined second list (92) are not stored.

13. The data carrier (10) according to claim 12, **characterized in that** the server application (50) is configured as a web server application and is adapted to receive HTTP requests from an HTTP client application.

14. The data carrier (10) according to claim 12 or 13, **characterized by** a control application (80) stored in the memory (46) and executable on the processor (30), said control application being adapted to carry out, in interaction with the web server application (50), a method according to any of the claims 3 to 11.

15. The data carrier (10) according to any of the claims 12 to 14, **characterized in that** the web server application (50) is adapted to add those header data entries to a list (90, 94) of header data entries to be stored, which are potentially accessed by the web server application (50) in a further step for processing the client request.

## Revendications

1. Procédé de traitement de demandes client par un support de données (10) portable limité en ressources, comprenant les étapes à exécuter par une application serveur (50) installée sur le support de données (10):
- réception (110) d'une demande client ;
- analyse syntaxique (120) d'une partie de données de tête de la demande client;
- mémorisation (140; 180) d'entrées de données de tête de la partie de données de tête;
**caractérisé en ce que**
une première liste (90) d'entrées de données de tête devant être mémorisées est prescrite et que ce sont des entrées de données de tête de la demande client comprises dans la première liste (90) prescrite qui sont mémorisées par l'application serveur, et
une deuxième liste (92) d'entrées de données de tête ne devant pas être mémorisées est prescrite et que ce sont des entrées de données de tête de la demande client comprises dans la deuxième liste (92) prescrite qui ne sont pas mémorisées par l'application serveur.

2. Procédé selon la revendication 1, **caractérisé en ce que** l'application serveur (50) est réalisée en tant qu'application serveur web qui reçoit en tant que demande client une demande HTTP.

3. Procédé selon la revendication 1 ou 2, **caractérisé en ce que** des entrées de données de tête devant être ultérieurement mémorisées sont ajoutées (180; 220) à la première liste (90) et que des entrées de données de tête ne devant ultérieurement plus être mémorisées sont enlevées de la première liste (90).

4. Procédé selon la revendication 3, **caractérisé en ce que** des entrées de données de tête devant être ultérieurement mémorisées sont enlevées (220) de la deuxième liste (92) que des entrées de données de tête ne devant ultérieurement plus être mémorisées sont ajoutées à la deuxième liste (92).

5. Procédé selon la revendication 3 ou 4, **caractérisé en ce que** des entrées de données de tête de la demande client qui ne sont pas comprises dans la première liste (90) des entrées de données de tête devant être mémorisées et qui ne sont pas comprises dans la deuxième liste (92) des entrées de données de tête ne devant pas être mémorisées sont ajoutées à la première liste (90) des entrées de données de tête devant être mémorisées et sont mémorisées (180).

6. Procédé selon la revendication 3 ou 5, **caractérisé en ce que** la première (90) et la deuxième liste (92) comprennent des entrées de données de tête prescrites par une spécification, un critère de mémorisation étant vérifié pour une entrée de données de tête non prescrite par une spécification de la demande client, et cette entrée de données de tête étant, quand le critère de mémorisation est rempli, ajoutée dans une troisième liste (94) d'entrées de données de tête devant être mémorisées.

7. Procédé selon la revendication 6, **caractérisé en ce qu'**un nombre maximum d'entrées de données de tête devant être ajoutées à la troisième liste (94) est prescrit et qu'il est vérifié en tant que critère de mémorisation si le nombre d'entrées de données de tête actuellement mémorisées dans la troisième liste (94) est inférieur au nombre maximum prescrit.

8. Procédé selon une des revendications de 1 à 7, **caractérisé par** l'étape supplémentaire de l'accès (200) à une entrée de données de tête de la demande client par l'application serveur web (50) et, au cas où l'entrée de données de tête correspondante n'a pas été mémorisée auparavant, l'étape de l'ajout (220) de l'entrée de données de tête à une liste (90, 94) d'entrées de données de tête devant être mémorisées.

9. Procédé selon la revendication 8, **caractérisé par** les étapes supplémentaires de la réanalyse syntaxique (240) et de la mémorisation (140) de l'entrée de données de tête par le serveur après l'étape de l'ajout (220) de l'entrée de données de tête à une liste (90, 94) d'entrées de données de tête devant être mémorisées.

10. Procédé selon la revendication 8, **caractérisé par** l'étape supplémentaire de la transmission (250) d'un ordre d'envoi, par l'application serveur web (50) à un dispositif client, lequel a envoyé la demande client au support de données (10), pour le ré-envoi de la demande client par le dispositif client, après l'étape de l'ajout (220) de l'entrée de données de tête à une liste (90, 94) d'entrées de données de tête devant être mémorisées.

11. Procédé selon une des revendications de 1 à 10, **caractérisé par** l'étape consistant en ce que l'application serveur web (50) ajoute à une liste (90, 94) d'entrées de données de tête des entrées de données de tête devant être mémorisées qui sont des entrées auxquelles l'application serveur web (50) accède potentiellement lors d'une étape supplémentaire pour le traitement de la demande client.

12. Support de données (10) portable limité en ressources, comprenant une mémoire (46) logée sur une puce semi-conductrice distincte, un processeur (30) ainsi qu'une application serveur (50) mémorisée dans la mémoire (46) et exécutable sur le processeur (30), qui est configurée pour recevoir une demande client, pour effectuer une analyse syntaxique d'une partie de données de tête de la demande client et pour mémoriser dans la mémoire des entrées de données de tête de la partie de données de tête, **caractérisé en ce qu'**une première liste (90) prescrite et une deuxième liste (92) sont mémorisées dans la mémoire (46), des entrées de données de tête devant être mémorisées étant mémorisées dans la première liste (90) et l'application serveur (50) étant configurée de telle sorte que ce sont des entrées de données de tête de la demande client comprises dans la première liste (90) prescrite qui sont mémorisées, et des entrées de données de tête ne devant pas être mémorisées étant mémorisées dans la deuxième liste (92) et des entrées de données de tête de la demande client n'étant pas mémorisées étant des entrées comprises dans la deuxième liste (92) prescrite.

13. Support de données (10) selon la revendication 12, **caractérisé en ce que** l'application serveur (50) est réalisée an tant qu'application serveur web et est configurée pour recevoir des demandes HTTP d'une application client HTTP.

14. Support de données (10) selon la revendication 12 ou 13, **caractérisé par** une application de commande (80) mémorisée dans la mémoire (46) et exécutable sur le processeur (30), qui est configurée pour exécuter en interaction avec l'application serveur web (50) un procédé selon une des revendications de 3 à 11.

15. Support de données (10) selon une des revendications de 12 à 14, **caractérisé en ce que** l'application serveur web (50) est configurée pour ajouter à une liste (90, 94) d'entrées de données de tête devant être mémorisées des entrées de données de tête qui sont des entrées auxquelles l'application serveur web (50) accède potentiellement lors d'une étape supplémentaire pour le traitement de la demande client.
